# EUROPEAN PATENT APPLICATION

(11) **EP 2 629 173 A2**
(43) Date of publication of application: **21.08.2013**
(21) Application number: 11789250.5
(22) Date of filing: 09.06.2011
(51) Int. Cl.: G06F 1/26

(54) **METHOD AND SYSTEM FOR POWERING USB DEVICE**

(71) Applicant: Huawei Device Co., Ltd., Shenzhen, Guangdong 518129 (CN)
(72) Inventor: YAN, Zhijun, Shenzhen Guangdong 518129 (CN)
(74) Representative: Epping - Hermann - Fischer
(86) International application number: PCT/CN2011/075542
(87) International publication number: WO 2011/150871

(57) **Abstract**

The present invention relates to the field of terminal technologies, and discloses a method and a system for supplying power to a USB device. The system includes a USB device and a host, where the USB device is connected to the host through a USB cable, and the host may supply power to the USB device through the USB cable. The power supplying method includes: when a power supplying state of the host changes, automatically switching a power supplying manner for the USB device; when an electric quantity of the USB device is low, performing comprehensive analysis on power supplying state information of the USB device and the host according to a rule set by a monitoring program, selecting a proper power supplying manner and implementing dynamic switching of the power supplying manner. According to the present invention, the power supplying manner may be dynamically switched in a case that a connection is not broken, which ensures electricity supply to the USB device in a case that endurance of the host itself is ensured.

## Description

### TECHNICAL FIELD

The present invention relates to the field of terminal technologies, and in particular, to a method and a system for supplying power to a USB device.

### BACKGROUND

With the continuous development of science and technologies and the continuous improvement of an integrated circuit technology level, a volume of a current terminal electronic device is smaller and smaller and a function is stronger and stronger. At the same time, the rapid development of mobile Internet services, mobile communication services, mobile phone games and so on also makes people increasingly use small terminal electronic devices to access a network or for entertainment. Therefore, there is a higher requirement for endurance of a battery of a terminal product.

A USB (Universal Serial Bus, universal serial bus) is a serial bus standard connecting a computer system and an external device, is also a technical specification of an input/output interface, and is widely applied to information communication products such as a personal computer and a mobile device. The USB supports hot plugging, is mainly used for data communication between a host and an external device, and also gradually becomes a standardized interface of a charging function of a small terminal electronic device currently.

Currently, people increasingly select a USB cable to supply power to a terminal electronic device having a USB interface through a computer. There are two manners for a computer to supply power to a USB device currently: One is that the computer supplies power to the USB device fixedly, and this manner cannot ensure electricity supply to the computer itself for a device with a high requirement for endurance, such as a tablet computer and a portable computer that have no external power source; and the other is that the USB device supplies power to itself fixedly, and in this manner, when electric quantity of the USB device is not enough, the computer cannot supplies power to the device, which causes that the electric quantity of the USB device runs out and the USB device cannot continue to be used.

To sum up, in the prior art, no method can implement electric quantity supply to the USB device in a case that endurance of the computer itself is ensured.

### SUMMARY

In consideration of deficiencies of the method in the prior art, the present invention provides a method and a system for supplying power to a USB device, which can dynamically adjust a manner for a host to supply power to a USB device, and implement electricity supply to the USB device in a case that endurance of the host itself is ensured.

An embodiment of the present invention provides a system that can dynamically adjust a manner for a host to supply power to a USB device, where the system includes a USB device and a host, both the USB device and the host include an information collection unit, a storage unit, a control unit, a communication unit and a power supplying unit, and
the information collection unit is configured to collect power supplying state information, the storage unit is configured to store the power supplying state information and a monitoring program code, the control unit is configured to determine a power supplying manner and control switching of the power supplying manner, the communication unit is configured to perform communication, and the power supplying unit is configured to supply electricity.

An embodiment of the present invention further provides a method that dynamically adjust a manner for a host to supply power to a USB device, where the method includes:
starting, by a USB device, a monitoring process, collecting power supplying state information of the USB device, starting, by a host, a monitoring process, and collecting power supplying state information of the host;
communicating, by the USB device, with the host through a USB cable, and reporting, by the USB device, the power supplying state information of the USB device to the host; and
performing, by the host, analysis processing on the power supplying state information of the USB device and the host, and determining a power supplying manner for the USB device and dynamically switching the power supplying manner as required.

In the foregoing technical solutions, in a case that a connection between the USB device and the host is not broken, the manner for the host to supply power to the USB device is dynamically adjusted according to the power supplying state information of the USB device and the host, thereby implementing electricity supply to the USB device in a case that endurance of the host itself is ensured.

### BRIEF DESCRIPTION OF DRAWINGS

FIG. 1 is a schematic diagram of a system for supplying power to a USB device;

FIG. 2 is a schematic diagram of a method for performing power supplying state information communication between a USB device and a host;

FIG. 3 is a schematic diagram of a method for a host to determine whether it is permitted to supply power to a USB device;

FIG. 4 is a schematic diagram of a method for a host to determine whether to change a power supplying manner for a USB device;

FIG. 5 is a schematic diagram of a rule for how to determine whether a host supplies power to a USB device; and

FIG. 6 is a schematic diagram of a method for dynamically switching a power supplying manner for a USB device.

### DESCRIPTION OF EMBODIMENTS

To make the objectives, technical solutions and advantages of the present invention clearer, the following further describes the present invention in detail with reference to accompanying drawings.

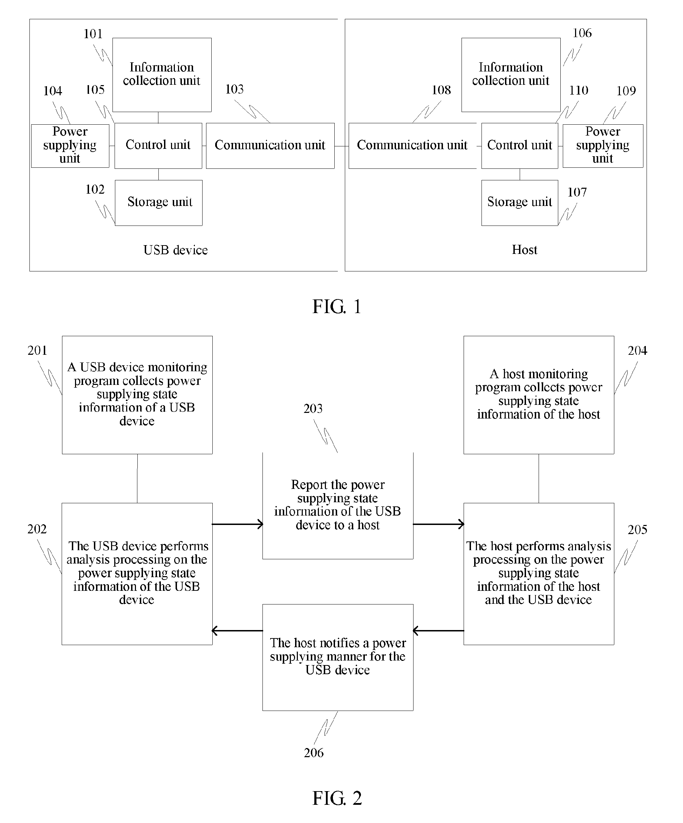

FIG. 1 is a schematic diagram of a system for supplying power to a USB device, and the system includes a USB device and a host, where the USB device is connected to the host through a USB cable, and both ends of the USB cable are connected to the USB device and the host through a USB interface respectively. A host motherboard may provide a voltage of 5 V for the USB interface, and a limited supply current is 500 mA.

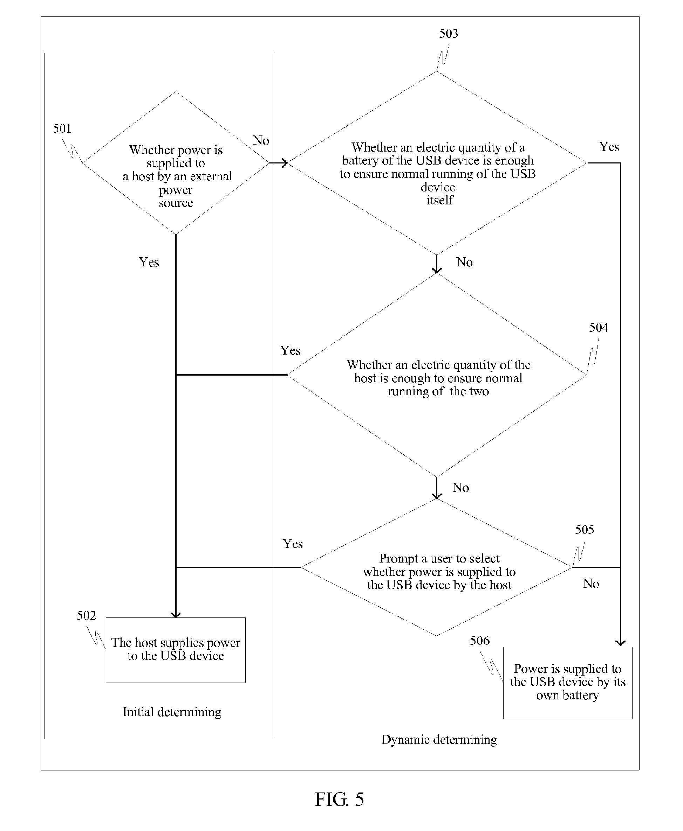

The USB device includes:
an information collection unit 101, configured to collect power supplying state information of the USB device, and report the power supplying state information of the USB device to a control unit 104. The power supplying state information includes a voltage of a battery of the USB device, a total capacity of the battery of the USB device, a current capacity of the battery of the USB device, a lowest electric quantity needed for the USB device to run normally, and so on, to which, definitely, the power supplying state information of the USB device is not limited, and information not listed here may also be included. The information collection unit may collect the power supplying state information of the USB in real time, and may also collect the power supplying state information in a fixed time interval (such as 5 minutes);
a storage unit 102, configured to store the power supplying state information of the USB device, and a code needed for a monitoring process run by the control unit 104. The storage unit 102 in the USB device manifests as an internal memory and an external memory, and the power supplying state information which is of the USB device and is collected by the information collection unit 101 is generally directly stored in the internal memory for the control unit 104 to read/write and operate. The code needed for the monitoring process is stored in the external memory, and when the USB device runs, the monitoring process program code of the USB device is read into the internal memory to run the progress under the control of the control unit 104;
a communication unit 103, configured to work with a communication unit 108 cooperatively under the control of the control unit 105, and complete communication between the USB device and the host. In this embodiment, the USB device is connected to the host through a USB cable, both ends of the USB cable are connected to the USB device and the host through a USB interface respectively, and a standard USB interface has four pins, which are defined as follows: VBUS, providing a positive 5 V power source; Data-, data sending/receiving; Data+, data sending/receiving; and GND, grounding. The pin VBUS is used to supply power to the USB device through the USB cable, the pins Data- and Data+ are collectively used for data communication;
a power supplying unit 104, configured to supply power to the USB device under the control of the control unit 105, manifests as a rechargeable battery (such as a lithium battery) in the USB device, and configured to directly supply power to the USB device; or manifests as hardware, and when an electric quantity of the battery of the USB device itself is not enough, the host supplies power to the USB device through a charging circuit of the hardware; and
a control unit 105, configured to control each unit of the USB device to work cooperatively, receive an instruction delivered by the host, and control switching of a power supplying manner for the USB device. In this embodiment, the control unit manifests as a chip of a processor, and the processor runs the monitoring process of the USB device, controls other four units in the USB device to work cooperatively by issuing an instruction, receives the instruction delivered by the host and completes a task required by the host. When the power supplying manner needs to be changed, switching of the power supplying manner is controlled, and the method for controlling the switching of the power supplying manner is described in detail in an embodiment shown in FIG. 5.

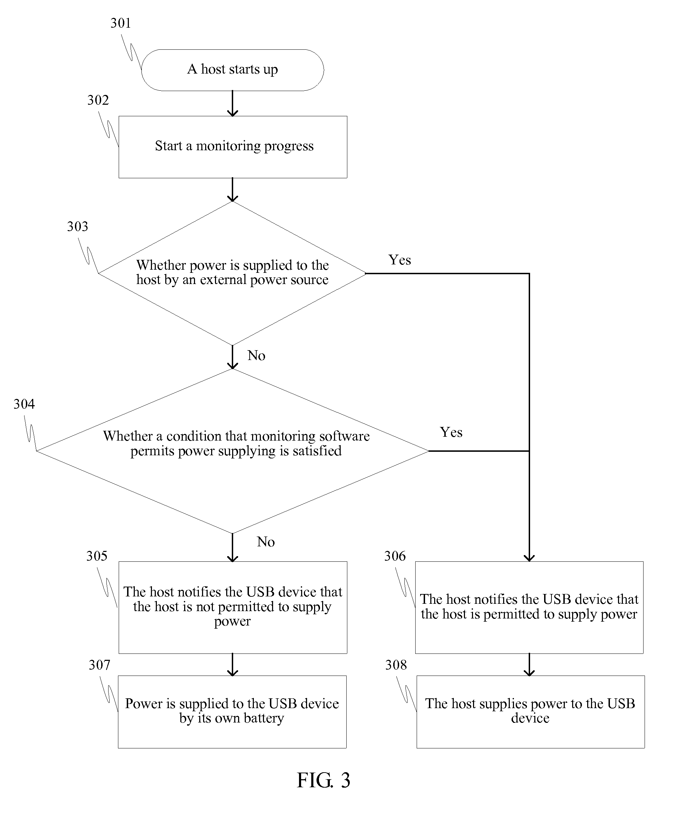

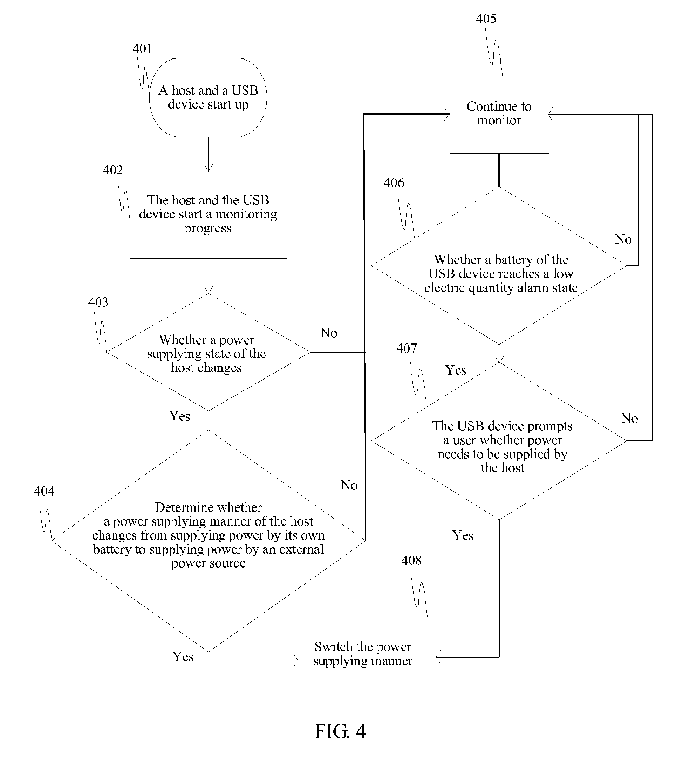

The host includes:
an information collection unit 106, configured to collect power supplying state information of the host, and report the power supplying state information of the host to a control unit 110. The power supplying state information includes whether the host uses an external power source for power supplying, and when the host uses a battery of the host itself for power supplying instead of using the external power source for power supplying, further includes a voltage of the battery of the host, a total capacity of the battery of the host, a current capacity of the battery of the host, a lowest electric quantity needed for normal running of the host, and so on, to which, definitely, the power supplying state information of the host is not limited, and information not listed here may also be included. The information collection unit 106 may collect the power supplying state information of the host in real time, and may also collect the power supplying state information of the host in a fixed time interval (such as 5 minutes);
a storage unit 107, configured to store the power supplying state information of the host, and a code needed for a monitoring process run by the control unit 110. The storage unit 107 in the host manifests as an internal memory and an external memory, and the power supplying state information which is of the host and is collected by the information collection unit 106 is generally directly stored in the internal memory for the control unit 110 to read/write and operate. The code needed for the monitoring process is stored in the external memory, and when the host runs, the monitoring process program code of the host is read into the internal memory to run the progress under the control of the control unit 108;
a communication unit 108, configured to work with a communication unit 103 cooperatively under the control of the control unit 110, and completes communication between the host and the USB device. A structure and a function of the communication unit 108 are similar to those of the foregoing communication unit 103, and are not repeatedly described here;
a power supplying unit 109, configured to supply power to the host under the control of the control unit 110, manifests as a rechargeable battery (such as a lithium battery) in the host, and configured to directly supply power to the host; or manifests as an external power source (such as an external power source adapter), and configured to supply power to the host through an external direct current or alternating current power source; and
a control unit 110, configured to control each unit of the host to work cooperatively, determine the power supplying manner and control switching of the power supplying manner for the USB device. In this embodiment, the control unit manifests as a CPU (Central Processing Unit, central processing unit). The CPU runs the monitoring process, controls other three units to work cooperatively by issuing an instruction, performs an operating operation on the collected power supplying state information of the host and the power supplying state information which is of the USB device and is reported by the USB device, determines the power supplying manner for the USB device, and when the power supplying manner for the USB device needs to be changed, controls the switching of the power supplying manner for the USB device. The method for determining whether it is permitted to supply power to the USB device and the method for controlling the switching of the power supplying manner for the USB device are described in detail in embodiments shown in FIG. 3 and FIG. 4.

FIG. 2 is a schematic diagram of a method for performing power supplying state information communication between a USB device and a host, and the information communication method includes:

201: A USB device collects power supplying state information of the USB device, where this process is completed by the foregoing information collection unit 101.

202: The USB device performs analysis processing on the power supplying state information, where this process is completed by the foregoing control unit 104, and the analysis processing includes whether a current electric quantity of a battery of the USB device is enough to ensure normal running of the USB device.

203: The USB device reports the power supplying state information of the USB device to a host, where this process is completed by the foregoing communication unit 104 under the control of the foregoing control unit 105.

204: A host monitoring program collects power supplying state information of the host, where this process is completed by the foregoing information collection unit 204.

205: The host performs analysis processing on the power supplying state information of the host and the power supplying state information which is of the USB device and is reported by the USB device, where this process is completed by the foregoing control unit 110. The analysis processing here includes determining whether the host is permitted to supply power to the USB device and control switching of a power supplying manner for the USB device, and the method for determining whether it is permitted to supply power to the USB device and the method for controlling the switching of the power supplying manner for the USB device are described in detail in embodiments shown in FIG. 3 and FIG. 4.

206: The host delivers an instruction to the USB device and notifies the manner for the host to supply power to the USB, where this process is completed by the foregoing communication unit 108 under the control of the foregoing control unit 110.

FIG. 3 is a schematic diagram of a method for a host to determine whether it is permitted to supply power to a USB device, and the method includes:

301: A host starts up and is connected to a power source.

302: The host powers on, loads a monitoring software program from a hard disk, starts a monitoring process, and monitors power supplying state information of the host.

303: According to the power supplying state information which is of the host and is collected in the foregoing step 302, determine whether power is supplied to the host by an external power source, if yes, namely, when power is supplied to the host by the external power source, the host supplies power to the USB device, so go to step 306; if no, namely, when power is supplied to the host by its own battery, according to current power supplying state information of the host and the USB device, determine whether a condition that it is permitted to supply power to the USB device is satisfied, so go to step 304.

304: According to a rule made by a monitoring program, assess the current power supplying state information of the host and the USB device, and determine whether the condition that it is permitted to supply power to the USB device is satisfied, if yes, go to step 306, if no, go to step 305; and the method for determining whether the condition that it is permitted to supply power to the USB device is satisfied here is described in detail in an embodiment shown in FIG. 4.

305: The host sends a command to the USB device and notifies the USB device that the host is not permitted to supply power to the USB device.

306: The host sends a command to the USB device and notifies the USB device that the host is permitted to supply power to the USB device.

307: After receiving the notification that the host is not permitted to supply power to the USB device, the USB device uses its own battery to supply power to the USB device.

308: After receiving the notification that the host is permitted to supply power to the USB device, the host supplies power to the USB device.

In this embodiment, for simplicity and convenience, the USB device starts and is connected to the host through a USB cable by default, and the USB device starts the monitoring process and communicates the power supplying state information with the host by default.

FIG. 4 is a schematic diagram of a method for a host to determine whether to change a power supplying manner for a USB device. In FIG. 3, how to determine whether the host is permitted to supply power to the USB device is described. In order to disclose the method provided by the present invention more clearly, when a power supplying state of the host changes, how to determine whether the host is permitted to supply power to the USB device is further described in this figure, and the method includes the following steps:

401: A host and a USB device start up, are connected to a power source, and are connected through a USB cable.

402: The host and the USB device power on, load a monitoring software program from a storage unit, start a monitoring process, and monitor power supplying state information of the host and the USB device.

403: According to the power supplying state information which is of the host and is monitored in real time, determine whether a power supplying manner of the host changes, if yes, go to step 404, and if no, go to step 405.

404: Determine a changing manner of the power supplying manner of the host, if it is changed from supplying power by a battery of the host itself to supplying power by an external power source, go to step 408, and if it is changed from supplying power by an external power source to supplying power by a battery of the host itself, go to step 405.

405: Continue to monitor the power supplying state information of the host and the USB device.

406: According to a rule made by a monitoring program of the USB device, determine whether a battery of the USB device reaches a low electric quantity alarm state, if yes, go to step 407, if no, go to step 405.

407: The USB device prompts a user whether power needs to be supplied by the host, the user may make selection, if the user selects yes, go to step 408, and if the user selects no, go to step 405.

408: The power supplying manner for the USB device switches from supplying power to the USB device by the battery of the USB device itself to supplying power to the USB device by the host.

In this embodiment, steps 401 and 402 are not necessary, it only needs to ensure that the host and the USB device start, the two are connected through the USB cable, and both start the monitoring process separately, and may perform communication of the power supplying state information. At the same time, it should be noted that, in the schematic diagram of the method, when the host and the USB device are in any state from 405 to 408, if the power supplying state of the host changes, go to step 403.

FIG. 5 is a schematic diagram of a rule for how to determine whether a host supplies power to a USB device, the embodiments in FIG. 3 and FIG. 4 provide methods for determining whether the host is permitted to supply power to the USB device and whether a power supplying manner for the USB device needs to be changed. In the method, determining is performed according to a rule set in a monitoring program, and the rule is divided into two steps: initial determining and dynamic determining, which specifically are:

Initial determining: Only a power supplying manner of the host is taken as a determining basis, and if power is supplied to the host by an external power source, the host supplies power to the USB device; otherwise, the dynamic determining needs to be further performed.

Dynamic determining: When power is supplied to the host by its own battery, there are the following cases: When electricity of a battery of the USB device is enough to ensure normal running of the USB device, power is supplied to the USB device by its own battery; when the electricity of the battery of the USB device cannot ensure the normal running of the USB device, the USB device requests the host to supply power, and the host determines an electricity supplying situation of its own battery, if the electricity of the battery of the host itself is enough to ensure normal running of the two, the host supplies power to the USB device, and if the electricity of the battery of the host itself is not enough to ensure the normal running of the two, a prompt pops up on the host or the USB device, and a user selects whether the host supplies power to the USB device.

A procedure of a determining rule is specifically described by referring to FIG. 5, and the steps are:

501: Determine whether power is supplied to a host by an external power source, if yes, go to step 502, and if no, go to step 503.

502: When power is supplied to the host by the external power source, the host supplies power to a USB device by default.

503: When power is supplied to the host by its own battery, the host does not supply power to a USB device by default, and a power supplying manner needs to be determined according to power supplying state information of the host and the USB device; and determine whether an electric quantity of a battery of the USB device is enough to ensure normal running of the USB device, if yes, go to step 506, and if no, go to step 504.

504: When the electric quantity of the battery of the USB device is not enough to ensure the normal running of the USB device, the host determines an electric quantity of a battery of the host, determines whether the electric quantity of the battery of the host is enough to ensure normal running of both the USB device and the host, if yes, go to step 502, and the host supplies power to the USB device, and if no, go to step 505.

505: When the electric quantity of the host is not enough to ensure the normal running of both the USB device and the host, the host or the USB device prompts a user, the user selects whether power is supplied by the host, if yes, go to 502, and the host supplies power to the USB device, and if no, go to step 506.

506: If the user selects that power is not supplied to the USB device by the host, the USB device continues to use its own battery for power supplying.

A rule of determining whether the electricity of the battery of the host and the electricity of the battery of the USB device can ensure the normal running of the host and the USB device itself may be made by the user: For example, if a percentage of a current electric quantity of the battery to a total electric quantity is higher than a certain threshold value (for example, 20%), it is considered that the electricity is enough to ensure its own normal running; or if an absolute value of a current electric quantity needs to be higher than a certain threshold value (for example, 100 mA for the USB device and 500 mA for the host), it is considered that the electricity is enough to ensure its own normal running. Each threshold value is set by research and development personnel during research and development of a monitoring program, and may also be autonomously set by the user through a parameter modification interface provided by the program in the monitoring program.

It should be noted that, a rule of determining whether a power supplying manner needs to be changed is not limited to this.

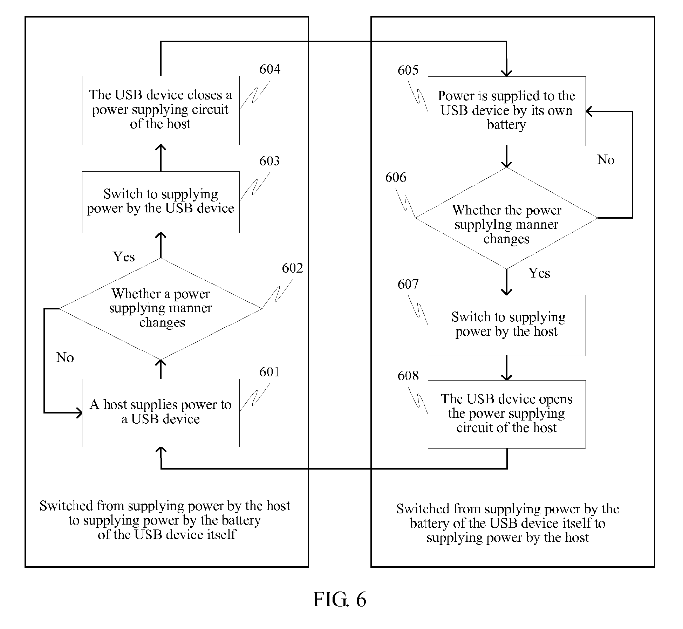

FIG. 6 is a schematic diagram of a method for dynamically switching a power supplying manner for a USB device, it is described in FIG. 3 and FIG. 4 that the power supplying manner needs to be switched in a case, and in order to disclose the method provided by the present invention more clearly, this figure further describes when a USB device needs to change a power supplying manner, how the USB device and a host and cooperatively implement dynamic switching of the power supplying manner. Here it is assumed that a current state is that the host supplies power to the USB device. A specific procedure is as follows:

601: A host supplies power to a USB device through a hardware charging circuit of the foregoing power supplying unit 104, and in this case, the USB device maintains a state that power is supplied to the USB device by the host.

602: The host determines whether a power supplying manner for the USB device needs to be changed from supplying power by the host to supplying power by a battery of the USB device itself, if yes, go to step 603, and if no, go to step 601; and the determining is performed according to the method in the embodiment shown in FIG. 4.

603: Switch the power supplying manner for the USB device from supplying power by the host to supplying power by the battery of the USB device itself.

604: The USB device closes the hardware charging circuit through which the host supplies power to the USB device, where this process is completed under the control of the control unit 105 of the foregoing USB device.

606: The power supplying manner for the USB device maintains a state that power is supplied by its own battery, until the power supplying manner for the USB device needs to be changed.

606: The host determines whether the power supplying manner for the USB device needs to be changed from supplying power by the battery of the USB device itself to supplying power to the USB device by the host, if yes, go to step 607, and if no, go to step 605.

607: Switch the power supplying manner for the USB device from supplying power by the battery of the USB device itself to supplying power to the USB device by the host.

608: The USB device opens the hardware charging circuit through which the host supplies power to the USB device, where this process is completed under the control of the control unit 105 of the foregoing USB device.

The schematic diagram is a cycle state diagram, the left is switching the power supplying manner for the USB device from supplying power by the host to supplying power by the battery of the USB device itself, and the right is switching the power supplying manner for the USB device from supplying power by the battery of the USB device itself to supplying power by the host. The power supplying state of the USB device may be in any stage in the schematic diagram, and may be dynamically switched, and for simplicity and convenience, it is assumed that the procedure starts from step 601 in the schematic diagram and method description.

All or part of the steps of the foregoing method embodiments may be implemented by a program instructing relevant hardware. The program may be stored in a computer readable storage medium. When the program is run, the processes of the foregoing method embodiments are performed. The storage medium includes any medium that is capable of storing program codes, such as a ROM, a RAM, a magnetic disk, or an optical disk.

The foregoing description is merely exemplary specific embodiments of the present invention, but is not intended to limit the protection scope of the present invention. Any variation or replacement figured out by persons skilled in the art within the technical scope disclosed in the present invention shall fall within the protection scope of the present invention. Therefore, the protection scope of the present invention shall be subject to the protection scope of the claims.

## Claims

1. A method for supplying power to a USB device, comprising:
starting, by a USB device, a monitoring process, collecting power supplying state information of the USB device, starting, by a host, a monitoring process, and collecting power supplying state information of the host;
communicating, by the USB device, with the host through a USB cable, and reporting, by the USB device, the power supplying state information of the USB device to the host; and
performing, by the host, analysis processing on the power supplying state information of the USB device and the host, and determining a power supplying manner for the USB device and dynamically switching the power supplying manner as required.

2. The method for supplying power to a USB device according to claim 1, wherein a method for performing communication between the USB device and the host comprises:
collecting, by an information collection unit of the USB device, the power supplying state information of the USB device;
performing, by a control unit of the USB device, analysis processing on the power supplying state information of the USB device;
reporting, by a communication unit of the USB device, the power supplying state information of the USB device to the host under the control of the control unit of the USB device;
collecting, by an information collection unit of the host, the power supplying state information of the host;
performing, by a control unit of the host, analysis processing on the power supplying state information of the host and the power supplying state information which is of the USB device and is reported by the USB device, and determining whether the host is permitted to supply power to the USB device and control the switching of the power supplying manner for the USB device; and
delivering, by a communication unit of the host, an instruction to the USB device under the control of the control unit of the host, and notifying the power supplying manner for the USB device.

3. The method for supplying power to a USB device according to claim 2, wherein in a process of communication between the USB device and the host, the collecting, by the information collection unit of the host, the power supplying state information of the host does not necessarily need to be performed after the first three steps in the method according to claim 2 are completed, but may also be performed concurrently with the first three steps.

4. The method for supplying power to a USB device according to claim 3, wherein the determining whether the host is permitted to supply power to the USB device comprises: determining, by the host and according to the power supplying state information of the host, if power is supplied to the host by an external power source, permitting the host to supply power to the USB device; and if not, according to the power supplying state information of the host and the power supplying state information of the USB device, determining whether the host is permitted to supply power to the USB device.

5. The method for supplying power to a USB device according to claim 4, wherein when a power supplying state of the host changes, if the power supplying state changes from supplying power by a battery of the host itself to supplying power by the external power source, the host is permitted to supply power to the USB device; and if the power supplying state changes from supplying power by the external power source to supplying power by the battery of the host itself, whether the host is permitted to supply power to the USB device is determined according to the power supplying state information of the host and the power supplying state information of the USB device collectively.

6. The method for supplying power to a USB device according to claim 4 or 5, wherein a method for determining whether the host is permitted to supply power to the USB device according to the power supplying state information of the host and the power supplying state information of the USB device collectively comprises:
when electricity of a battery of the USB device is enough to ensure its own normal running, supplying, by its own battery, power to the USB device;
when the electricity of the battery of the USB device cannot ensure its normal running, requesting the host to supply power, and determining, by the host, an electricity supplying situation of its own battery, if electricity of the battery of the host is enough to ensure normal running of both the host itself and the USB device, supplying, by the host, power to the USB device; and
if the electricity of the battery of the host itself is not enough to ensure normal running of the two, popping up a prompt on the host or on the USB device, and selecting, by a user, whether the host supplies power to the USB device.

7. The method for supplying power to a USB device according to claim 6, wherein a method for determining whether the electricity of the battery of the USB device and the electricity of the battery of the host are enough to ensure their own normal running comprises: determining a percentage of a current electric quantity of the battery to a total electric quantity or whether an absolute value of a current electric quantity is higher than a certain threshold value, wherein if yes, the electricity is enough to ensure its own normal running, and if no, the electricity is not enough to ensure its own normal running.

8. The method for supplying power to a USB device according to claim 7, wherein a threshold value that determines whether the electricity of the battery of the USB device and the electricity of the battery of the host are enough to ensure their own normal running is set by research and development personnel during research and development of a monitoring program, and may also be autonomously set by the user through a parameter modification interface provided by the program in the monitoring program.

9. The method for supplying power to a USB device according to claim 8, wherein a method for dynamically switching the power supplying manner for the USB device comprises:
when the USB device is in a state that power is supplied to the USB device by the host, and if the power supplying manner for the USB device needs to be changed from supplying power to the USB device by the host to supplying power by the battery of the USB device itself, switching the power supplying manner for the USB device from supplying power to the USB device by the host to supplying power by the battery of the USB device itself, and closing a hardware charging circuit through which the host supplies power to the USB device, and then maintaining a state that power is supplied by the battery of the USB device itself, until the power supplying manner for the USB device needs to be changed; and
when the USB device is in a state that power is supplied by its own battery, and if the power supplying manner for the USB device needs to be changed from supplying power by its own battery to supplying power to the USB device by the host, switching the power supplying manner for the USB device from supplying power by its own battery to supplying power to the USB device by the host, and opening the hardware charging circuit through which the host supplies power to the USB device, and then maintaining the state that power is supplied to the USB device by the host, until the power supplying manner for the USB device needs to be changed.

10. A system for supplying power to a USB device, comprising a USB device and a host, wherein each of the USB device and the host comprises an information collection unit, a storage unit, a control unit, a communication unit, and a power supplying unit, the information collection unit is configured to collect power supplying state information, the storage unit is configured to store the power supplying state information and a monitoring program code, the control unit is configured to determine a power supplying manner and control switching of the power supplying manner, the communication unit is configured to perform communication, and the power supplying unit is configured to supply electricity.

11. The system for supplying power to a USB device according to claim 10, wherein the USB device and the host are connected through a USB cable, and both ends of the USB cable are connected to the USB device and the host through a USB interface respectively.

12. The system for supplying power to a USB device according to claim 11, wherein communication units of the USB device and the host are data sending/receiving pins of the USB interface, and are configured to communicate data between the USB device and the host.

13. The system for supplying power to a USB device according to claim 12, wherein the power supplying unit of the USB device is a rechargeable battery or a hardware charging circuit, the rechargeable battery supplies power to the USB device directly, and the host supplies power to the USB device through the hardware charging circuit via a USB cable.

14. The system for supplying power to a USB device according to claim 13, wherein the control unit of the USB device is a chip of a processor, and is configured to run a monitoring process of the USB device; control other four units in the USB device to work cooperatively by issuing an instruction; receive an instruction delivered by the host to complete a task required by the host; and control the switching of the power supplying manner when the power supplying manner needs to be changed.

15. The system for supplying power to a USB device according to claim 14, wherein the power supplying unit of the host is a rechargeable battery or an external power source, the rechargeable battery directly supplies power to the host, and the external power source supplies power to the host through an external direct current or alternating current power source.

16. The system for supplying power to a USB device according to claim 10, wherein the control unit of the host is a central processing unit, and is configured to run a monitoring process of the host; control other four units in the host to work cooperatively by issuing an instruction; perform an operating operation on collected power supplying state information of the host and power supplying state information which is of the USB device and is reported by the USB device, determine the power supplying manner for the USB device; and control the switching of the power supplying manner when the power supplying manner needs to be changed.
